# EUROPÄISCHE PATENTANMELDUNG

(11) **EP 0 893 693 A1**
(43) Veröffentlichungstag der Anmeldung: **27.01.1999**
(21) Anmeldenummer: 98113734.2
(22) Anmeldetag: 23.07.1998
(51) Int. Cl.: G01P 3/48

(54) **Vorrichtung zur Drehzahlbestimmung einer Brennkraftmaschine**

(30) Priorität: 25.07.1997 DE 19732087
(71) Anmelder: ROBERT BOSCH GMBH, 70442 Stuttgart (DE)
(72) Erfinder: Kutteruf, Karl-Martin, 73272 Neidlingen (DE); Lehmann, Siegfried, 73061 Ebersbach (DE)

(57) **Zusammenfassung**

Eine Vorrichtung zur Drehzahlbestimmung einer Brennkraftmaschine, ermittelt aus einem von der Brennkraftmaschine erzeugten Signal, bei bekannter Zylinderzahl der Brennkraftmaschine, die Drehzahl der Brennkraftmaschine durch Auswertung in einer signalverarbeitenden Anlage (15). Zur Bestimmung des Übersetzungsverhältnis zwischen der Frequenz eines Generators, der von der Brennkraftmaschine angetrieben wird, und der Drehzahl der Brennkraftmaschine wird der signalverarbeitenden Anlage als Eingangsgröße der mit der Zündfrequenz der Brennkraftmaschine pulsierende Bord- oder Batteriestrom (I_{B}) zugeführt, um die Drehzahl aus diesem Bord- oder Batteriestrom zu ermitteln. In vorteilhafter Ausgestaltung wird der signalverarbeitenden Anordnung auch der vom Generator erzeugte Bord- oder Batteriestrom (I_{B}) als Eingangsgröße zugeführt, welche die Generatorfrequenz enthält, um die Drehzahl aus der Generatorfrequenz zu ermitteln.

## Beschreibung

### Stand der Technik

Die Erfindung geht aus von einer Vorrichtung zur Drehzahlbestimmung einer Brennkraftmaschine mit einer signalverarbeitenden Anordnung, der im Oberbegriff des Anspruchs 1 definierten Gattung.

Aus der EP 0 472 877 B1 ist eine Vorrichtung zur Drehzahlermittlung einer in einem Kraftfahrzeug angeordneten Brennkraftmaschine, die mit einer elektrischen Zündanlage gezündet wird, mit einer signalverarbeitenden Anordnung bekannt. Die signalverarbeitende Anordnung erfaßt im Betrieb die auf ein einen Drehstromgenerator enthaltendes Bordnetz eingekoppelten, den Zündimpulsen entsprechenden Signalanteilen, umfaßt eine Eingabeeinheit, über welche die Anzahl der Zündimpulse pro Umdrehung der Brennkraftmaschine eingegeben wird und ermittelt im Betrieb die Generatorfrequenz der vom Drehstromgenerator auf dem Bordnetz verursachten Restwelligkeit. Aus der ermittelten Generatorfrequenz, den den Zündimpulsen entsprechenden Signalanteilen und der eingegebenen Anzahl von Zündimpulsen pro Umdrehung der Brennkraftmaschine wird das Übersetzungsverhältnis zwischen der Generatorfrequenz und der Drehzahl der Brennkraftmaschine ermittelt. Aus der mit dem so ermittelten Übersetzungsverhältnis bewerteten Generatorfrequenz wird die Drehzahl berechnet. Bei dieser nur einen Sensor benötigenden Vorrichtung ergeben sich unter gewissen betrieblichen Bedingungen gelegentlich Unsicherheiten in der Detektionssicherheit.

Aus der EP 0 408 877 A2 ist zur Drehzahlermittlung einer Brennkraftmaschine, sei es ein Otto- oder auch ein Dieselmotor, die einen von ihr angetriebenen Generator enthalt, ein Verfahren bekannt, bei dem mit einer signalverarbeitenden Anordnung aus dem am Generator bzw. der Last anliegenden Signal, welches einen Signalanteil höherer und einen niedrigerer Frequenz enthalt, die Drehzahl ermittelt wird. Dabei wird aus beiden Signalanteilen zusammen das Übersetzungsverhältnis des Antriebs zwischen Brennkraftmaschine und Generator ermittelt. Dieses Übersetzungsverhältnis geht, ebenso wie die Zylinderzahl der Brennkraftmaschine, in die Berechnung der Drehzahl aus dem höherfrequenten Signalanteil ein. Aus dem niederfrequenten Signalanteil wird durch Frequenz-Demodulation der Arbeitstakt und aus diesem bei bekannter Zylinderzahl die Drehzahl der Brennkraftmaschine ermittelt. Dieses Ergebnis wird zur Ermittlung des genannten Übersetzungsverhältnisses verwendet.

Bei diesem bekannten Verfahren werden zur Ermittlung der Drehzahl jeweils frequenzmodulierte Signalanteile der Generatorfrequenz ausgewertet. In der Praxis hat sich herausgestellt, daß dieses Verfahren insbesondere bei Dieselmotoren sehr zuverlässig arbeitet. Bei der Anwendung für Ottomotoren hat sich als nachteilig herausgestellt, daß die Modulation des niederfrequenten Signalanteils, aus dem der Arbeitszyklus der Brennkraftmaschine ermittelt wird, wesentlich schwächer ausgeprägt ist.

Weiterhin ist aus der EP-A 0 701 134 ein Verfahren zur Ermittlung der Drehzahl eines Verbrennungsmotors bekannt, bei dem die Drehzahl zum einem aus der von einem Generator erzeugten Bordnetzspannung und zum anderen in dem unteren Drehzahlbereich aus der vom Verbrennungsmotor erzeugten Schwingung oder dem von ihrem Auspuff erzeugten Geräusch ermittelt wird. Das Geräusch wird über ein Mikrophon abgenommen, welches in der Nähe des Auspuffs angebracht werden muß. Die Schwingung wird über einen Beschleunigungsmesser abgenommen, der am Motor angebracht ist. Die aus der Frequenz des akustischen Geräuschs oder der Motorschwingung festgestellten Werte und die daraus errechneten Drehzahlwerte dienen der Kalibrierung der aus der Bordnetzspannung gewonnenen Drehzahl. Es wird daraus eine Konstante ermittelt, welche das Verhältnis zwischen der Frequenz der Generatorspannung und der akustischen bzw. mechanischen Frequenz angibt. Diese Konstante dient mit der Auswertung der Generatorfrequenz der eigentlichen Drehzahlangabe. Es ist klar, daß bei diesem bekannten Verfahren durch die Notwendigkeit der Bereitstellung von akustischem oder mechanisch schwingendem Signal ein größerer Aufwand getrieben werden muß, welcher darüber hinaus in der Handhabung sehr umständlich und zeitaufwendig ist. Darüberhinaus können Fremdgeräusche zu erheblichen Störungen führen.

### Vorteile der Erfindung

Die erfindungsgemaße Vorrichtung zur Drehzahlbestimmung einer Brennkraftmaschine mit den kennzeichnenden Merkmalen des Anspruchs 1 hat demgegenüber den Vorteil, eine einfache und zuverlässige Lösung zur Verfügung zu stellen, bei welcher die Wahrscheinlichkeit der Detektion der Drehzahl ganz erheblich verbessert ist. Bei einfachster Handhabung und unter Vermeidung von großem Meßaufwand ist eine sehr zuverlässige Drehzahlangabe auch bei hohen Drehzahlen, sowohl bei Diesel- wie bei Otto-Motoren zuverlässig ermöglicht. Die Zündimpulse werden aus dem Bord- oder Batteriestrom ermittelt, der gemäß einer bevorzugten Ausführung auf altbewährte Weise mit einer Strommeß- oder Triggerzange erfaßt wird.

Bei der Vorrichtung nach der Erfindung wird dazu prinzipiell zur Bestimmung des Übersetzungsverhältnis zwischen der Generatorfrequenz und der Drehzahl der Brennkraftmaschine der signalverarbeitenden Anlage als Eingangsgröße der mit der Zündfrequenz der Brennkraftmaschine pulsierende Bord- oder Batteriestrom zugeführt, um die Drehzahl aus dem Bord- oder Batteriestrom zu ermitteln.

Durch die in den weiteren Ansprüchen niedergelegten Maßnahmen sind vorteilhafte Weiterbildungen und Verbesserungen der im Anspruch 1 angegebenen Vorrichtung möglich.

Nach einer besonders zweckmäßigen Weiterbildung der Erfindung ist ein Generator vorgesehen, der von der Brennkraftmaschine angetrieben wird, und es ist vorgesehen, daß der signalverarbeitenden Anordnung der vom Generator erzeugte und/oder in einer Last fließende Bord- oder Batteriestrom als Eingangsgröße zugeführt wird, welche die Generatorfrequenz enthält, um die Drehzahl aus der Generatorfrequenz zu ermitteln. Damit wird eine Vorrichtung zur Verfügung gestellt, welche sicher und zuverlässig die Drehzahl über den gesamten Drehzahlbereich einer Brennkraftmaschine zu ermitteln in der Lage ist. Mit Hilfe des aus den beiden auf unterschiedliche Weise ermittelten Drehzahlen gebildeten Verhältniswertes wird kann dann sehr zuverlässig insbesondere bei höheren und hohen Drehzahlen diese überwiegend allein aus dem höherfrequenten Signalanteil berechnet werden.

In vorteilhafter Ausgestaltung der erfindungsgemäßen Vorrichtung wird der Bord- oder Batteriestrom mit Hilfe einer Stromzange oder einer Triggerzange erfaßt. Damit ist eine einfache und in der Praxis sehr verbreitete, einfach zu handhabende und sichere Erfassung des Stromes gegeben, der zu den bestimmten Meß- und Prüfzwecken benötigt wird.

In einer weiteren vorteilhaften Ausgestaltung der Erfindung ist vorgesehen, daß der Bord- oder Batteriestrom über eine Signalaufbereitung und gegebenenfalls über einen Komparator der signalverarbeitenden Anordnung zugeführt wird.

In besonders vorteilhafter und zweckmäßiger Weiterbildung der Erfindung wird der als Eingangsgröße verwendete Bord- oder Batteriestrom, welcher die Generatorfrequenz enthält, über ein Filter zur Eliminierung der Generatorrestwelligkeit und gegebenenfalls über einen Komparator der signalverarbeitenden Anordnung zugeführt.

Entsprechend einer vorteilhaften Anwendung der erfindungsgemäßen Vorrichtung wird die Drehzahlbestimmung aus dem mit der Zündfrequenz der Brennkraftmaschine pulsierenden Bord- oder Batteriestrom bevorzugt zur Ermittlung der Leerlaufdrehzahl sowie niedriger Drehzahlen der Brennkraftmaschine verwendet.

Entsprechend einer weiteren vorteilhaften Anwendung der erfindungsgemäßen Vorrichtung wird die Drehzahlbestimmung aus der Generatorfrequenz bevorzugt zur Ermittlung hoher Drehzahlen sowie der Drehzahl oberhalb des Leerlaufs der Brennkraftmaschine verwendet.

Die Vorrichtung gemäß der Erfindung ist in vorteilhafter Weise zur Drehzahlmessung für Test- und Prüfzwecke sowohl von Otto- als auch von Dieselmotoren in Kraftfahrzeugen vorgesehen.

### Zeichnung

Die Erfindung ist anhand eines in der Zeichnung dargestellten Ausführungsbeispiels in der nachfolgenden Beschreibung näher erläutert. Die einzige Figur zeigt schematisch in einem Blockschaltbild den Aufbau der erfindungsgemäßen Vorrichtung zur Drehzahlbestimmung gemäß der Erfindung.

### Beschreibung des Ausführungsbeispiels

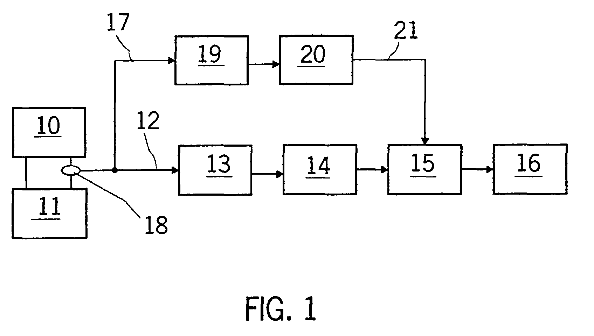

In Fig. 1 ist schematisch in einem Blockschaltbild der Aufbau der erfindungsgemäßen Vorrichtung zur Drehzahlbestimmung einer Brennkraftmaschine gemäß der Erfindung dargestellt. Der von einem nicht näher dargestellten Generator, der von einer Brennkraftmaschine angetrieben wird, erzeugte Strom, der in einem Bordnetz 10, beispielsweise einer Kraftfahrzeugelektrik, ansteht und/oder an eine Last wie beispielsweise die Batterie 11 eines Kraftfahrzeuges abgegeben wird, ist mit I_{B} bezeichnet. Dieser Strom I_{B} wird vorteilhafterweise mit Hilfe einer Strommeßzange oder Triggerzange 18 abgenommen und als Eingangsgröße über eine Leitung 12 einem ersten Zweig zugeführt. In diesem ersten Zweig ist ein Filter 13 und ein Komparator 14 vorgesehen, dessen Ausgangssignal einer signalverarbeitenden Anordnung 15 zugeführt wird. Am Ausgang der signalverarbeitenden Anordnung 15 steht die ermittelte Drehzahl an, welche z.B. in einer Anzeige 16 visuell angezeigt werden kann.

Über über einen zweiten Zweig, in dem in Serie angeordnet eine Signalaufbereitung 19 und ein Komparator 20 vorgesehen sind, wird über eine Leitung 17 der Bord- oder Batteriestrom I_{B} der signalverarbeitenden Anordnung 15 zugeführt. Der Bord- oder Batteriestrom I_{B} pulsiert mit der Zündfrequenz der Brennkraftmaschine. Er wird entsprechend einer vorteilhaften Ausgestaltung der Erfindung mittels der Strommeßzange oder der Triggerzange 18 detektiert und über Leitung 17 der Signalaufbereitung 19 zugeführt. Mittels des Komparators 20 werden nur diejenigen Signalanteile der signalverarbeitenden Anordnung 15 zugeführt, die Information über die Zündimpulse enthalten.

Bei bekannter Zylinderzahl und Art der Brennkraftmaschine, beispielsweise Zwei- oder Viertakt, bestimmt die signalverarbeitende Anordnung 15 aus dem zugeführten Bord- oder Batteriestrom I_{B} die Drehzahl. Dies erfolgt insbesondere für die Ermittlung der Leerlaufdrehzahl und niedriger Drehzahlen. Diese ermittelte Drehzahl wird weiterhin zur Bestimmung des Übersetzungsverhältnisses zwischen der Generatorfrequenz und der Drehzahl der Brennkraftmaschine benutzt. Bei höheren Drehzahlen wird die Drehzahl vorzugsweise über den ersten Zweig aus dem Bord- oder Batteriestrom I_{B} ermittelt, weil dieser in der Generatorrestwelligkeit einen auswertbaren Beitrag enthält, aus der die Generatorfrequenz zu ermitteln ist.

Das im ersten Zweig enthaltene Filter 13 begrenzt die dem Komparator 14 zugeführten Signalanteile des Stromes I_{B} auf diejenigen Werte, welche für die Auswertung in Frage kommen und eine relevanten Beitrag leisten. Der Komparator 14 vergleicht diese vom Filter 13 gelieferten Signalwerte mit vorgegebenen oberen und unteren Grenzwerten, um das der signalverarbeitenden Anordnung 15 zugeführte Signal dieser möglichst verarbeitungsgerecht zuzuführen. Diese bestimmt daraus unter zu Hilfenahme des ermittelten Übersetzungsverhältnisses zwischen der Generatorfrequenz und der Drehzahl der Brennkraftmaschine deren Drehzahl, welche auf der Anzeige 16 angezeigt wird. Diese Vorgehensweise ist hauptsächlich für mittlere und höhere Drehzahlen zuständig.

Die erfindungsgemäße Vorrichtung ist bevorzugt zur Drehzahlmessung für Test- und Prüfzwecke sowohl von Otto- als auch von Dieselmotoren in Kraftfahrzeugen vorgesehen.

Mit der Erfindung ist in vorteilhafter Weise eine Vorrichtung zur Verfügung gestellt, die leicht am Fahrzeug adaptierbar ist. Mit ihrer Hilfe kann zuverlässig sowohl bei Ottomotoren als auch bei Dieselmotoren die Drehzahl gemessen werden. Die Vorrichtung ist gegen Störeinflüsse auf dem Bordnetz erheblich unempfindlicher als bekannte Einrichtungen, da über die Strommeßzange eine altbewährte einfache Adaption möglich ist, welche ganz erheblich zur Detektionssicherheit der Drehzahl beiträgt. Dies ist für die Praxis ein ganz wesentlicher Aspekt.

## Patentansprüche

1. Vorrichtung zur Drehzahlbestimmung einer Brennkraftmaschine, welche aus einem von der Brennkraftmaschine erzeugten Signal, bei bekannter Zylinderzahl der Brennkraftmaschine, die Drehzahl der Brennkraftmaschine durch Auswertung in einer signalverarbeitenden Anlage (15) ermittelt,
dadurch gekennzeichnet, daß
zur Bestimmung des Übersetzungsverhältnis zwischen der Generatorfrequenz und der Drehzahl der Brennkraftmaschine der signalverarbeitenden Anlage (15) als Eingangsgröße der mit der Zündfrequenz der Brennkraftmaschine pulsierende Bord- oder Batteriestrom (I_{B}) zugeführt wird, um die Drehzahl aus diesem Bord- oder Batteriestrom (I_{B}) zu ermitteln.

2. Vorrichtung nach Anspruch 1, dadurch gekennzeichnet, daß ein Generator vorgesehen ist, der von der Brennkraftmaschine angetrieben wird, und daß der signalverarbeitenden Anordnung (15) der vom Generator erzeugte und/oder in einer Last fließende Bord- oder Batteriestrom (I_{B}) als Eingangsgröße zugeführt wird, welche die Generatorfrequenz enthält, um die Drehzahl aus der Generatorfrequenz zu ermitteln.

3. Vorrichtung nach einem der vorigen Ansprüche, dadurch gekennzeichnet, daß der Bord- oder Batteriestrom (I_{B}) mit Hilfe einer Stromzange oder einer Triggerzange (18) erfaßt wird.

4. Vorrichtung nach einem der vorigen Ansprüche, dadurch gekennzeichnet, daß der Bord- oder Batteriestrom (I_{B}) über eine Signalaufbereitung (19) und gegebenenfalls über einen Komparator (20) der signalverarbeitenden Anordnung zugeführt wird.

5. Vorrichtung nach einem der Ansprüche 2 bis 4, dadurch gekennzeichnet, daß der als Eingangsgröße verwendete Bord- oder Batteriestrom (I_{B}), welcher die Generatorfrequenz enthält, über ein Filter (13) zur Eliminierung der Generatorrestwelligkeit und gegebenenfalls über einen Komparator (14) der signalverarbeitenden Anordnung (15) zugeführt wird.

6. Vorrichtung nach Anspruch 1, dadurch gekennzeichnet, daß sie zur bevorzugten Ermittlung der Leerlaufdrehzahl sowie niedriger Drehzahlen der Brennkraftmaschine verwendet wird.

7. Vorrichtung nach einem der Ansprüche 2 bis 5, dadurch gekennzeichnet, daß sie zur bevorzugten Ermittlung hoher Drehzahlen sowie der Drehzahl oberhalb des Leerlaufs der Brennkraftmaschine verwendet wird.

8. Vorrichtung nach einem der vorigen Ansprüche, dadurch gekennzeichnet, daß sie zur Drehzahlmessung für Test- und Prüfzwecke sowohl von Otto- als auch von Dieselmotoren in Kraftfahrzeugen vorgesehen ist.
